(19) **Europäisches Patentamt / European Patent Office / Office européen des brevets**

(11) **EP 4 768 438 A1**

(12) **EUROPEAN PATENT APPLICATION**

(43) Date of publication:
   **01.07.2026 Bulletin 2026/27**

(21) Application number: **25220084.5**

(22) Date of filing: **02.12.2025**

(51) International Patent Classification (IPC):
   **C01D 15/00** (2006.01)   **H01M 4/58** (2010.01)
   **C01B 25/26** (2006.01)   **C01B 25/30** (2006.01)
   **C01B 25/32** (2006.01)   **C01B 25/45** (2006.01)

(52) Cooperative Patent Classification (CPC):
   **H01M 4/5825; C01B 25/45**; C01P 2006/40;
   H01M 2004/029; Y02E 60/10

(84) Designated Contracting States:
   **AL AT BE BG CH CY CZ DE DK EE ES FI FR GB GR HR HU IE IS IT LI LT LU LV MC ME MK MT NL NO PL PT RO RS SE SI SK SM TR**
   Designated Extension States:
   **BA**
   Designated Validation States:
   **GE KH LA MA MD TN**

(30) Priority: **25.12.2024 JP 2024228175**

(71) Applicant: **Toyota Jidosha Kabushiki Kaisha**
   **Toyota-shi, Aichi-ken 471-8571 (JP)**

(72) Inventors:
   • **NOZAKI, Hiroo**
     **Toyota-shi, 471-8571 (JP)**
   • **YOKOE, Kenji**
     **Toyota-shi, 471-8571 (JP)**

(74) Representative: **Kuhnen & Wacker**
   **Patent- und Rechtsanwaltsbüro PartG mbB**
   **Prinz-Ludwig-Straße 40 A**
   **85354 Freising (DE)**

(54) **POSITIVE ELECTRODE ACTIVE MATERIAL, ELECTRODE AND BATTERY**

(57) The positive electrode active material includes olivine lithium manganese iron phosphate. The olivine lithium manganese iron phosphate includes a dopant at a manganese-iron site. At the manganese-iron site, the dopant satisfies a relationship of "$d_{Fe-X} < d_{Mn-X}$". The term "$d_{Fe-X}$" represents a nearest-neighbor atomic distance between the dopant and iron. The term "$d_{Mn-X}$" represents a nearest-neighbor atomic distance between the dopant and manganese.

## FIG. 2

MnFe site
Li site
P site
O site

EP 4 768 438 A1

**Description**

BACKGROUND OF THE INVENTION

1. Field of the Invention

The present disclosure relates to a positive electrode active material, an electrode, and a battery.

2. Description of Related Art

WO 2016/158566 discloses lithium manganese phosphate nanoparticles.

SUMMARY OF THE INVENTION

Olivine lithium manganese iron phosphate (LMFP) is examined as a positive electrode active material. The discharge curve of LMFP includes a manganese (Mn) plateau derived from the redox reaction of Mn and an iron (Fe) plateau derived from the redox reaction of Fe. Since the voltage difference between the Mn plateau and the Fe plateau (hereinafter, also referred to as "a gap between plateaus") is large, a rapid increase in the resistance (spiky peak) tends to occur in the boundary division between the Mn plateau and the Fe plateau (hereinafter, also referred to as "a plateau boundary division"), during charge and discharge.

The present disclosure provides a positive electrode active material, electrode, and battery that relate to mitigating the increase in the resistance in the plateau boundary division of LMFP.

Hereinafter, the technical constitution and the operation and effect of the present disclosure will be described. However, the operation mechanism includes presumptions. The operation mechanism does not limit the technical scope of the present disclosure.

The positive electrode active material according to the first aspect of the present disclosure includes olivine lithium manganese iron phosphate. The olivine lithium manganese iron phosphate includes a dopant at a manganese-iron site. The dopant satisfies a relationship of "$d_{Fc-X} < d_{Mn-X}$" in the manganese-iron site. The term "$d_{Fc-X}$" represents a nearest-neighbor atomic distance between the dopant and iron. The term "$d_{Mn-X}$" represents a nearest-neighbor atomic distance between the dopant and manganese.

In the LMFP of the present disclosure, the dopant "X" is introduced into the MnFe site. In the MnFe site, the dopant is introduced into a position closer to Fe than Mn. The dopant is unevenly distributed on the Fe side, so that the Mn plateau does not substantially change, and the Fe plateau may increase. The reduction in the gap between plateaus is expected to mitigate an increase in the resistance in the plateau boundary division.

In the positive electrode active material according to the first aspect of the present disclosure, the dopant may include an element that causes valence fluctuation between 1+ and 3+.

Mn and Fe cause valence fluctuation between 2+ and 3+. The element that causes valence fluctuation between 1+ and 3+ is considered to be capable of having suitable electrons between 2+ and 3+.

In the positive electrode active material according to the first aspect of the present disclosure, the dopant may include gallium.

Ga is an example of the element that causes valence fluctuation between 1+ and 3+.

In the positive electrode active material according to the first aspect of the present disclosure, the site occupancy of the dopant at the manganese-iron site may be 1% or more.

In the positive electrode active material according to the first aspect of the present disclosure, the site occupancy of the dopant may be 4% or more.

In the positive electrode active material according to the first aspect of the present disclosure, the site occupancy of the dopant may be 8% or more.

In the positive electrode active material according to the first aspect of the present disclosure, the olivine lithium manganese iron phosphate may include a composition represented by the general formula "$Li_{1+a}[(Mn_{1-b}Fe_b)_{1-c}X_c]PO_4$". In the general formula, "X" may represent the dopant. The relationships of "$-0.5 \leq a \leq 0.5$", "$0.1 \leq b \leq 0.9$", and "$0.01 \leq c \leq 0.12$" may be satisfied.

For example, sites other than the MnFe site may be undoped.

In the positive electrode active material according to the first aspect of the present disclosure, the discharge curve may include a Mn plateau derived from a redox reaction of manganese and a Fe plateau derived from a redox reaction of iron. The voltage difference between the Mn plateau and the Fe plateau may be 0.5 V or less.

When the gap between plateaus is 0.5 V or less, an increase in the resistance in the plateau boundary division is expected to be mitigated.

In the positive electrode active material according to the first aspect of the present disclosure, the site occupancy may be 30% or less.

In the positive electrode active material according to the first aspect of the present disclosure, the voltage difference between the Mn plateau and the Fe plateau may be 0.38 V or more.

The electrode according to the second aspect of the present disclosure may include a positive electrode layer. The positive electrode layer may include the positive electrode active material according to the first aspect.

The positive electrode layer may be referred to as "a positive electrode active material layer", "a positive electrode composite layer", and the like. The "electrode" may be "a monopolar electrode (positive electrode)" or "a bipolar electrode", as long as the electrode includes the positive electrode layer.

The battery according to the third aspect of the present disclosure may include the electrode according to the second aspect.

In the battery according to the third aspect of the present disclosure, the battery may include a bipolar structure.

The bipolar structure may be formed by laminating bipolar electrodes. Since cells are connected in series in the bipolar structure, the influence of the gap between plateaus may be amplified.

Hereinafter, an embodiment of the present disclosure (hereinafter, optionally abbreviated as "the present embodiment"), and an example of the present disclosure (hereinafter, optionally abbreviated as "the present example") will be described. However, the present embodiment and the present example do not limit the technical scope of the present disclosure. The present embodiment and the present example are exemplary only in all respects. The present embodiment and the present example are non-limiting. The technical scope of the present disclosure encompasses all modifications within the meanings and scope equivalent to the description of claims. For example, it is also anticipated from the beginning that any structures may be extracted from the present embodiment and are arbitrarily combined.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a graph of an example of the fitting results;
FIG. 2 is a conceptual diagram of a crystal structure;
FIG. 3 is a conceptual diagram of the atomic arrangement at the MnFe site in the present embodiment;
FIG. 4 is a diagram illustrating the discharge curve and the resistance change in the present embodiment;
FIG. 5 is a schematic perspective view of the battery in the present embodiment;
FIG. 6 is a schematic cross-sectional view along the line VI-VI in FIG. 5;
FIG. 7 is a table of the experimental results;
FIG. 8A is a graph illustrating discharge curves of Ga (0%) and Ga (12%); and
FIG. 8B is a graph illustrating resistance changes of Ga (0%) and Ga (12%).

DETAILED DESCRIPTION OF EMBODIMENTS

Terms, Phrases

The terms "comprise", "include", "have", and variations thereof are open-ended expressions. The structure represented by an open-ended expression may further include or may not include additional elements in addition to essential elements. The description "consist of" is a closed-ended expression. However, even a structure represented by a closed-ended expression may include additional elements that are usually accompanying impurities or irrelevant to the target technique. The description of "substantially consist of ..." is a semi-closed-ended expression. In the structure represented by a semi-closed-ended expression, addition of the elements that substantially do not affect basic and novel characteristics of the target technique is acceptable.

The expressions such as "may" and "can" do not mean "must" that signifies requisiteness, and are used as "be likely to" that signifies acceptability.

Geometric terms should not be interpreted in a strict sense. Examples of geometric terms include "parallel", "perpendicular", and "orthogonal". For example, the direction, angle, and distance may be relatively displaced, within a range capable of obtaining substantially the same or similar functions. Geometric terms may include, for example, a tolerance and an error in design, work, and manufacture. The dimensional relationships in each drawing sometimes do not correspond to actual dimensional relationships. To help the understanding of the readers, the dimensional relationships in each drawing are sometimes changed. For example, the length, width, thickness, and the like are changed in some cases. Some structures are omitted in some cases.

An element described by "a singular form" may include a plural form, unless otherwise specified. For example, a particle may refer to a plurality of particles, an aggregation of particles, and a powder and granular material, in some cases.

Note that, "a plurality of particles" may be referred to as "a particle group".

Unless otherwise specified, a numerical range such as "m to n%" includes an upper limit value and a lower limit value. That is, the term "m% to n%" refers to a numerical range of "m% or more and n% or less". The term "m% or more and n% or less" includes "more than m% and less than n%". The terms "or more" and "or less" are represented by a less-than-or-equal-to sign and a greater-than-or-equal-to sign "$\leq$, $\geq$". The terms "more than" and "less than" are represented by a less-than sign and a greater-than sign "<, >". A numerical value arbitrarily selected from the numerical range may be determined as a new upper limit value or lower limit value. For example, a new numerical range may be set by arbitrarily combining a numerical value in the numerical range with a numerical value described in another part, table, drawing, or the like in the present specification.

All numerical values are modified by the term "about". The term "about" may mean, for example, $\pm 5\%$, $\pm 3\%$, or $\pm 1\%$. All numerical values may be appropriate values that may be changed depending on the mode of use of the target technique. All numerical values may be expressed in significant figures. A measured value may be an average value in measurement performed multiple times, unless otherwise specified. The number of times of measurement may be three times or more, five times or more, or 10 times or more. In general, the larger the number of times of measurement is, the more the reliability of the average value is expected to be improved. The measured value may be rounded off to the nearest unit based on the number of digits of the significant figure. The measured value may include, for example, an error due to the detection limit of the measurement apparatus.

The apparatuses, software, and the like used in measurement of various values are merely examples. An apparatus equivalent to the exemplified apparatus or the like may be used. When an equivalent is used, measurement conditions may be regulated according to the apparatus.

The term "D50" refers to a particle size at a cumulative value of 50% in a volume-based particle size distribution (cumulative distribution). The volume-based particle size distribution is measured by a laser diffraction particle size distribution analyzer.

The term "maximum Feret diameter" refers to the length of the long side of the minimum bounding rectangle (MBR) of a particle in a scanning electron microscope (SEM) image or transmission electron microscope (TEM) image of the particle. Note that, various dimension measurements and shape analyses in the SEM image and the like may be conducted by using, for example, image analysis software "ImageJ".

The chemical composition of a compound may be measured by inductively coupled plasma atomic emission spectroscopy (ICP-AES). A sample solution is prepared by dissolving 0.1 g of a sample (e.g., a positive electrode active material) in mixed acid of hydrochloric acid and sulfuric acid (10 ml). The sample solution is diluted to an appropriate concentration using a volumetric flask. After dilution, composition analysis is conducted using an ICP-AES apparatus. For example, the product name "PS3520UVDDII (manufactured by Hitachi High-Tech Corporation)" may be used.

A stoichiometric composition formula represents a representative example of a compound. The compound may have a non-stoichiometric composition. For example, "$Al_2O_3$" is not limited to the compound having an amount-of-substance ratio (molar ratio) of "Al/O = 2/3". "$Al_2O_3$" represents a compound that contains Al and O at any amount-of-substance ratio, unless otherwise specified. For example, the compound may be doped with a trace amount of elements. Some Al and O may be substituted with another element.

The introduction of the dopant into the MnFe site may be determined by the following procedures. When the powder X-ray diffraction (XRD) measurement of the positive electrode active material is conducted, an XRD pattern is obtained. For example, the measurement conditions of XRD are as follows.

Analysis method: wide-angle method
Measurement apparatus: SmartLabII (manufactured by Rigaku Corporation)
Measurement angle: 10° to 120°
Tube: CuK$\alpha$
Tube voltage: 45 kV
Tube current: 200 mA
Measurement mode: continuous mode
Step: 0.02
IS: 1/2
Speed: 2°/min
RS: 20 mm
Detection mode: one-dimensional

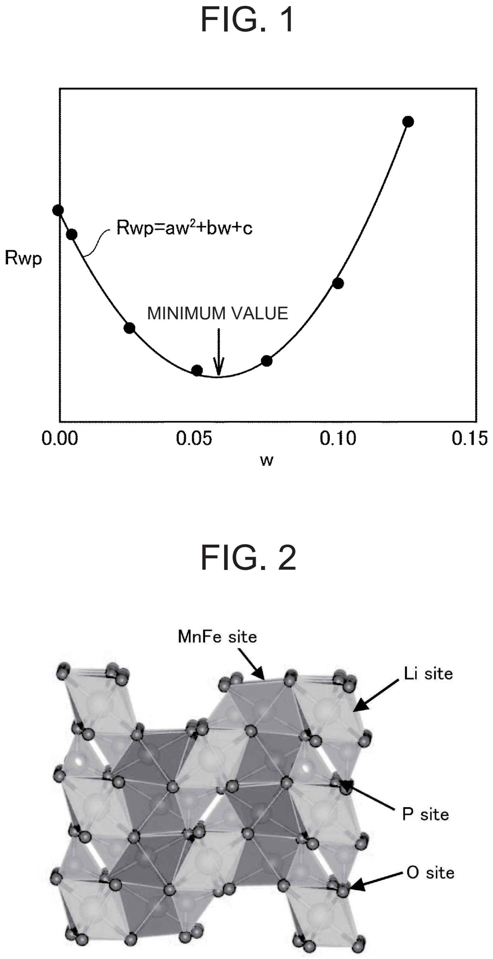

The XRD pattern is subjected to Rietveld refinement using software "GSAS-II". The structure model is the space group Pnma. The XRD pattern is subjected to background treatment and structure refinement. A variable is set to the composition of w. At this time, setting is generally conducted in the range of "$0 \leq w \leq 1$". Thereafter, when lattice constant refinement is conducted by determining the balance of the amount of addition as the dopant of the MnFe site, "Rwp" that is one of refinement indices is calculated. A quadratic function "Rwp = $aw^2$ + bw + c" is fitted to the values of Rwp and w. FIG. 1 is a graph of an example of the fitting results. In the obtained approximate curve, the percentage of w at which Rwp is minimum is considered as the site occupancy of the dopant.

The nearest-neighbor atomic distance between the dopant and Fe, "$d_{Fc-X}$" and the nearest-neighbor atomic distance between the dopant and Mn, "$d_{Mn-X}$" in the MnFe site can be specified by transmission electron microscopy energy dispersive x-ray spectroscopy (TEM-EDX).

The term "derivative" refers to a compound in which a part of the compound as a matrix is modified by at least one selected from the group consisting of the introduction of a functional group, the substitution of an atom, oxidation, reduction, and other chemical reactions. The site of modification may be one or a plurality of sites. For example, the term "substituent" may include at least one selected from the group consisting of an alkyl group, an alkenyl group, an alkynyl group, a cycloalkyl group, an unsaturated cycloalkyl group, an aromatic group, a heterocyclic ring group, a halogen atom (such as F, Cl, Br, or I), an OH group, an SH group, a CN group, an SCN group, an OCN group, a nitro group, an alkoxy group, an unsaturated alkoxy group, an amino group, an alkylamino group, a dialkylamino group, an aryloxy group, an acyl group, an alkoxycarbonyl group, an acyloxy group, an aryloxycarbonyl group, an acylamino group, an alkoxycarbonylamino group, an aryloxycarbonylamino group, a sulfonylamino group, a sulfamoyl group, a carbamoyl group, an alkylthio group, an arylthio group, a sulfonyl group, a sulfinyl group, a ureide group, an amide phosphate group, a sulfo group, a carboxy group, a hydroxamic acid group, a sulfino group, a hydrazino group, an imino group, and a silyl group. These substituents may be further substituted. When there are two or more substituents, the substituents may be the same or different from one another. A plurality of substituents may be bonded to one another to form a ring.

Positive Electrode Active Material

FIG. 2 is a conceptual diagram of a crystal structure. The positive electrode active material contains olivine lithium manganese iron phosphate (LMFP). LMFP has a crystal structure that belongs to the space group Pnma. The crystal structure can be specified by the XRD pattern. LMFP contains a Li site, a MnFe site, a P site, and an O site. LMFP contains a dopant "X" at the MnFe site. In the MnFe site, the dopant may be an interstitial dopant or a substitutional dopant. In the case of the substitutional dopant, the dopant may substitute Mn or Fe. As long as the dopant is introduced into the MnFe site, the dopant may be introduced into other sites, or other sites may be undoped. When the sites other than the MnFe site are undoped, simplification of a production process and the like are expected.

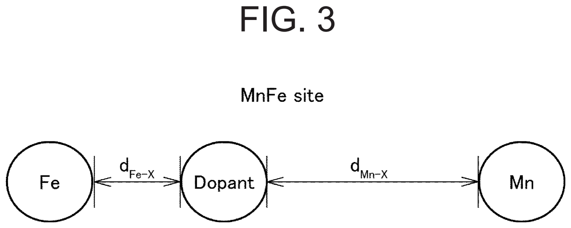

FIG. 3 is a conceptual diagram of the atomic arrangement in the MnFe site in the present embodiment. The dopant "X" is introduced into the vicinity of Fe. The nearest-neighbor atomic distance between the dopant and Fe, "$d_{Fc-X}$" is shorter than the nearest-neighbor atomic distance between the dopant and Mn, "$d_{Mn-X}$". That is, the dopant satisfies the relationship of "$d_{Fe-X} < d_{Mn-X}$" in the MnFe site. Hence, substantially no change of the Mn plateau and an increase of the Fe plateau are expected.

The ratio of the nearest-neighbor atomic distance "$d_{Fc-X}$" to the nearest-neighbor atomic distance "$d_{Mn-X}$", "$d_{Fe-X}/d_{Mn-X}$" may be, for example, 0.9 or less, 0.8 or less, 0.7 or less, 0.6 or less, 0.5 or less, 0.4 or less, 0.3 or less, or 0.2 or less. The ratio "$d_{Fe-X}/d_{Mn-X}$" may be, for example, 0.1 or more, 0.2 or more, 0.3 or more, 0.4 or more, 0.5 or more, 0.6 or more, 0.7 or more, 0.8 or more, or 0.9 or more.

The dopant may contain two or more elements or may be made of a single element. As the kind of dopant is fewer, simplification of a production process and the like are expected. The dopant may contain, for example, an element that causes valence fluctuation between 1+ and 3+. The dopant may contain, for example, Ga. Ga is considered that the transition between 1+ and 3+ is stable.

The site occupancy of the dopant at the MnFe site may be, for example, 0.1% or more, 0.5% or more, 1% or more, 2% or more, 3% or more, 4% or more, 5% or more, 6% or more, 7% or more, 8% or more, 9% or more, 10% or more, 11% or more, 12% or more, 15% or more, or 20% or more. The dopant site occupancy may be, for example, 30% or less, 20% or less, 15% or less, 12% or less, 11% or less, 10% or less, 9% or less, 8% or less, 7% or less, 6% or less, 5% or less, 4% or less, 3% or less, 2% or less, or 1% or less.

LMFP may have, for example, a composition represented by the general formula "$Li_{1+a}[(Mn_{1-b}Fe_b)_{1-c}X_c]PO_4$". In the general formula, for the Li composition ratio "1 + a", for example, the relationship of "$-0.5 \leq a \leq 0.5$" may be satisfied. "a" may be, for example, -0.4 or more, -0.3 or more, -0.2 or more, -0.1 or more, 0 or more, 0.1 or more, 0.2 or more, 0.3 or more, or 0.4 or more. "a" may be, for example, 0.4 or less, 0.3 or less, 0.2 or less, 0.1 or less, 0 or less, -0.1 or less, -0.2 or less, -0.3 or less, or -0.4 or less.

In the above general formula, for the Fe composition ratio "b", for example, the relationship of "$0.1 \leq b \leq 0.9$" may be satisfied. The Fe composition ratio "b" may be, for example, 0.2 or more, 0.3 or more, 0.4 or more, 0.5 or more, 0.6 or more, 0.7 or more, or 0.8 or more. The Fe composition ratio "b" may be, for example, 0.8 or less, 0.7 or less, 0.6 or less, 0.5 or less, 0.4 or less, 0.3 or less, or 0.2 or less.

In the above general formula, "X" represents the dopant. X may be, for example, Ga. In the above general formula, for the composition ratio "c" of the dopant, for example, the relationship of "$0.01 \leq c \leq 0.12$" may be satisfied. The composition ratio "c" of the dopant may be, for example, 0.02 or more, 0.03 or more, 0.04 or more, 0.05 or more, 0.06 or more, 0.07 or more, 0.08 or more, 0.09 or more, 0.10 or more, 0.11 or more, 0.12 or more, 0.15 or more, or 0.20 or more. The composition ratio "c" of the dopant may be, for example, 0.30 or less, 0.20 or less, 0.15 or less, 0.12 or less, 0.11 or less, 0.10 or less, 0.09 or less, 0.08 or less, 0.07 or less, 0.06 or less, 0.05 or less, 0.04 or less, 0.03 or less, 0.02 or less, or 0.01 or less.

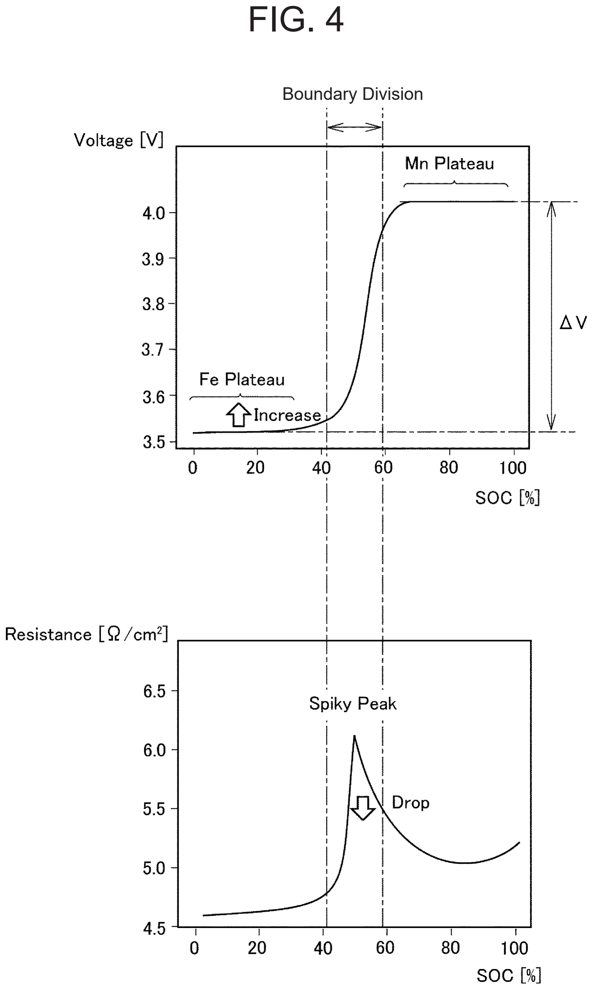

FIG. 4 is a diagram illustrating the discharge curve and the resistance change in the present embodiment. The upper graph is the discharge curve. The lower graph is the resistance change. The abscissa in each graph indicates the state of charge (SOC). The term "SOC" represents the proportion obtained by subtracting the proportion of the quantity of discharged electricity from a battery in a state of full charge. SOC of 100% represents the state of full charge. SOC of 0% represents the state of full discharge. The ordinate of the discharge curve indicates the battery voltage [unit: V]. The ordinate of the resistance change indicates the resistance [unit: $\Omega/cm^2$]. The measurement conditions of the discharge curve are, for example, as follows.

Counter electrode: Li metal
Electrolyte: $LiPF_6$ (1 M), EC/DMC = 3/7 (volume ratio)
Charge and discharge rate: 0.05 C
Charge upper limit voltage: 4.25 V
Discharge lower limit voltage: 3.0 V

The discharge curve of LMFP includes a Mn plateau and an Fe plateau. The Mn plateau is derived from the redox reaction of Mn. The Fe plateau is derived from the redox reaction of Fe. The term "plateau" indicates a region having a flat discharge curve. For example, a region where the change of the voltage with respect to the change of an SOC of 10% is 0.02 V or less may be considered to be a plateau. The range (capacity) of each plateau may be changed by, for example, the Fe composition ratio "b" in the above general formula. The term "plateau voltage" indicates an intermediate voltage in the region considered to be the plateau. The voltage of the Mn plateau may be, for example, from 4.00 V to 4.05 V.

The example of FIG. 4 has a plateau boundary division, "Boundary Division" in SOC of from 40% to 60%. The gap between plateaus "$\Delta V$" is usually about 0.60 V. As illustrated in the resistance change, the resistance may increase in a spiky form in the plateau boundary division. When the dopant is introduced into the MnFe site, the Fe plateau may increase. An increase of the Fe plateau may significantly mitigate the resistance increase in the plateau boundary division. The gap between plateaus may be, for example, 0.50 V or less due to the increase of the Fe plateau. The gap between plateaus may be, for example, 0.48 V or less, 0.46 V or less, 0.44 V or less, or 0.42 V or less. The gap between plateaus may be, for example, 0.38 V or more or 0.40 V or more.

In an undoped LMFP, the voltage of the Fe plateau is near 3.52 V. The voltage of the Fe plateau after doping may be, for example, 3.54 V or more, 3.56 V or more, or 3.58 V or more. The voltage of the Fe plateau after dopant introduction may be, for example, 3.62 V or less or 3.60 V or less.

LMFP may have, for example, a powder form. D50 of LMFP may be, for example, 5 μm or more, 10 μm or more, 15 μm or more, or 20 μm or more. D50 of LMFP may be, for example, 30 μm or less, 25 μm or less, 20 μm or less, 15 μm or less, or 10 μm or less.

LMFP may form secondary particles. A secondary particle is an aggregate of primary particles. The term "primary particle" refers to particles having apparently no grain boundaries on a two-dimensional image. The two-dimensional image may be, for example, a TEM image or an SEM image. The magnification of the image may be, for example, 10000 times to 30000 times. The secondary particle may have any shape. The secondary particle may be, for example, spherical, rodlike, or angular. When the secondary particle is spherical, for example, the improvement of packability is expected. The sphericity of the secondary particle may be, for example, 0.85 or more, 0.90 or more, or 0.95 or more. The sphericity of the secondary particle may be, for example, 1 or less, 0.95 or less, or 0.90 or less. The term "sphericity" refers to circularity in the SEM image. The sphericity (circularity) is determined by the following equation. As the value of sphericity, an arithmetic mean of 30 secondary particles is adopted.

$\psi = 4\pi S/L^2$
$\psi$: Sphericity (circularity)
$\pi$: Circumference ratio
S: Cross-sectional area of a particle (the area of the region surrounded by the outline of the particle)
L: Circumference of a particle (the length of the outline of the particle)

The primary particle may have any shape. The primary particle may be, for example, spherical, rodlike, or angular. The primary particle may be a nanoparticle. The maximum Feret diameter of the primary particle may be, for example, 10 nm to 300 nm. The maximum Feret diameter of the primary particle may be, for example, 15 nm or more, 20 nm or more, 25 nm or more, 50 nm or more, 75 nm or more, 100 nm or more, 150 nm or more, 200 nm or more, or 250 nm or more. The maximum Feret diameter of the primary particle may be, for example, 250 nm or less, 200 nm or less, 150 nm or less, 100 nm or less, 75 nm or less, 50 nm or less, or 25 nm or less. The maximum Feret diameter of the primary particle represents an arithmetic mean of 30 primary particles.

The surface of the primary particle may be coated with carbon. That is, a carbon layer or a carbon coating may be formed on the surface of the primary particle. A part of the surface of the primary particle or the entire surface of the primary particle may be coated with carbon. Carbon may be derived from a saccharide or the like. The amount of carbon attached may be, for example, 0.1% or more, 0.5% or more, 1% or more, 2% or more, 3% or more, or 4% or more by the mass fraction with respect to the secondary particle. The amount of carbon attached may be, for example, 5% or less, 4% or less, or 3% or less by the mass fraction with respect to the secondary particle.

The positive electrode active material may further contain other components, as long as containing LMFP. The mixing ratio of LMFP to other components (mass ratio) may be, for example, "LMFP/other components = 9/1 to 1/9", "LMFP/other components = 8/2 to 2/8", "LMFP/other components = 7/3 to 3/7", or "LMFP/other components = 6/4 to 4/6". The positive electrode active material may be, for example, a mixture of the powder of LMFP and the powder of other components. Other components may include, for example, at least one selected from the group consisting of $Li[NiCoMn]O_2$ (layered structure), $Li[NiCoAl]O_2$ (layered structure), $LiMnO_2$ (rock-salt structure), and $Li[NiMn]_2O_4$ (spinel structure). Note that the description such as [NiCoMn] represents that the sum of the composition ratio in [] is one. As long as the sum is one, components in [] may have any composition ratio.

Liquid battery

In some present embodiments, the battery may be a liquid battery. The term "liquid battery" refers to a battery including an electrolyte. For example, since a polymer battery includes an electrolyte, the polymer battery belongs to the liquid battery. In some present embodiments, the battery has a monopolar structure. In the monopolar structure, a power generation element may be a wound type or a laminated type. In some present embodiments, the battery has a bipolar structure. As an example, a battery (bipolar battery) having a bipolar structure will be described.

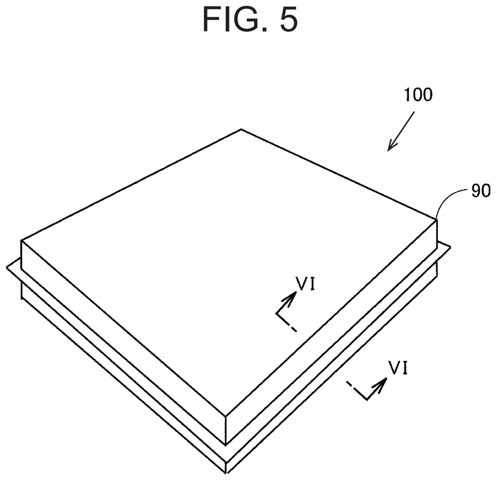

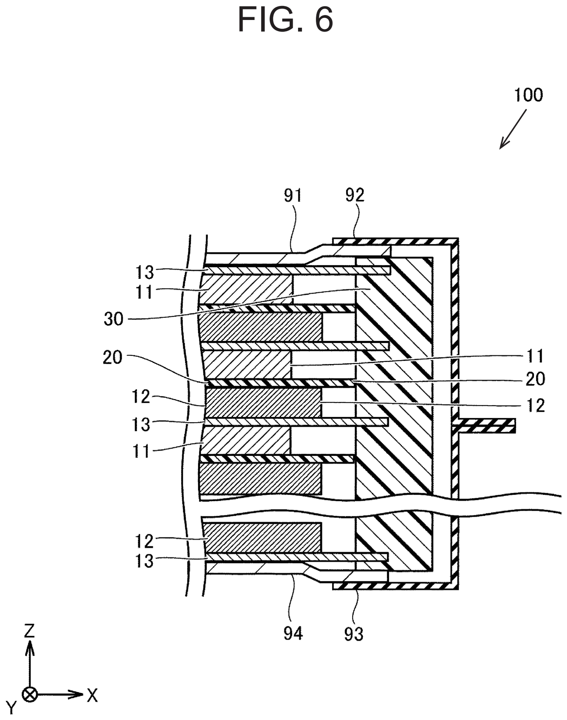

FIG. 5 is a schematic perspective view of the battery in the present embodiment. FIG. 6 is a schematic cross-sectional view along the line VI-VI in FIG. 5. Hereinafter, the term "perpendicular direction" refers to the normal direction to the surface of a sheet member (e.g., a foil or an electrode). The term "in-plane direction" refers to any direction orthogonally intersects the perpendicular direction. In the drawing of the present embodiment, the Z axis direction corresponds to the perpendicular direction. Each of the X axis direction and the Y axis direction is an example of the in-plane direction.

A battery 100 includes an outer packaging 90 and a power generation element. The outer packaging 90 stores the power generation element. The outer packaging 90 may include, for example, a first current-collector plate 91, a first laminate film 92, a second laminate film 93, and a second current-collector plate 94. The first laminate film 92 and the second laminate film 93 are joined with each other at an end part in the in-plane direction. At the joint part of the first laminate film 92 and the second laminate film 93, a sealing material (not shown) may be interposed between the first laminate film 92 and the second laminate film 93.

The first current-collector plate 91 and the second current-collector plate 94 are joined to the power generation element at the end part in the lamination direction (the Z axis direction). The first laminate film 92 is joined to the first current-collector plate 91. The second laminate film 93 is joined to the second current-collector plate 94. At the joint part of the current-collector plate and the laminate film, a sealing material (not shown) may be interposed between the current-collector plate and the laminate film.

The power generation element includes a plurality of bipolar electrodes. The plurality of bipolar electrodes is laminated in the perpendicular direction (the Z axis direction). Each of the bipolar electrodes includes a positive electrode layer 11, a collector foil 13, and a negative electrode layer 12 in the perpendicular direction in the order presented. In the in-plane direction (e.g., the X axis direction), the collector foil 13 is extended to the outside as compared with the positive electrode layer 11 and the negative electrode layer 12. For example, the collector foil 13 may be extended to the outside as compared with the positive electrode layer 11 and the negative electrode layer 12 over the whole circumference in the in-plane direction.

The collector foil 13 is a conductor. The collector foil 13 may contain, for example, a metal foil or a conductive resin layer. For example, the collector foil 13 may be formed by sticking an Al foil and a Cu foil together. A carbon material may be applied to the surface of the collector foil 13. The carbon material may contain, for example, carbon black.

The power generation element includes a sealing material 30. The sealing material 30 is joined to the collector foil 13 at the end part in the in-plane direction. The sealing material 30 may be heat-welded to, for example, the collector foil 13. For example, the sealing material 30 may be arranged over the whole circumference in the in-plane direction. The sealing material may contain, for example, a resin material. The sealing material 30 seals the space between the collector foils 13 adjacent to each other in the perpendicular direction. The sealing material 30 seals the space between the collector foils 13, so that cells are divided. The cell is the minimum unit of the power generation element. Since the battery 100 includes a plurality of cells, the cell may also be referred to as "a bipolar module". Each of the cells is sealed. Each of the cells is isolated from one another. Each of the cells includes the positive electrode layer 11, a separator 20, the negative electrode layer 12, and an electrolyte.

Positive Electrode Layer

The positive electrode layer 11 is attached to a surface of the collector foil 13. For example, a groove may be formed on the positive electrode layer 11. The positive electrode layer 11 may be formed, for example, in a stripe form. The positive electrode layer 11 contains a positive electrode active material. That is, the battery 100 contains the positive electrode active material. The details of the positive electrode active material are as described above.

The positive electrode layer 11 may further contain, for example, a conductive material and a binder, in addition to the positive electrode active material. The amount of the conductive material formulated may be, for example, 0.1 to 10 parts by mass based on 100 parts by mass of the positive electrode active material. The conductive material may contain any component. The conductive material may contain, for example, at least one selected from the group consisting of graphite, acetylene black (AB), ketjen black (R), vapor grown carbon fiber (VGCF), carbon nanotube (CNT), and graphene flake (GF).

The amount of the binder formulated may be, for example, 0.1 to 10 parts by mass based on 100 parts by mass of the positive electrode active material. The binder may contain any component. The binder may contain, for example, at least one selected from the group consisting of polyvinylidene fluoride (PVdF), a vinylidene fluoride-hexafluoropropylene copolymer (PVdF-HFP), polytetrafluoroethylene (PTFE), carboxymethyl cellulose (CMC), polyacrylic acid (PAA), polyvinyl alcohol (PVA), polyvinylpyrrolidone (PVP), polyoxyethylene alkyl ether, and derivatives thereof.

The positive electrode layer 11 may contain, for example, an inorganic filler, an organic filler, a solid electrolyte, a surface modifier, a dispersant, a lubricant, a flame retardant, a protective agent, a flux, a coupling agent, or an adsorbent. The positive electrode layer may contain, for example, polyoxyethylene allyl phenyl ether phosphate, zeolite, a silane coupling agent, $MoS_2$, or $WO_3$.

Negative Electrode Layer

The negative electrode layer 12 is attached to a surface of the collector foil 13. The negative electrode layer 12 is arranged on the back of the positive electrode layer 11. The negative electrode layer 12 may have a larger area than the area of the positive electrode layer 11. The negative electrode layer 12 contains a negative electrode active material.

The negative electrode active material may be, for example, in a particle form or a sheet form. D50 of the negative electrode active material may be, for example, 1 $\mu$m or more, 5 $\mu$m or more, or 10 $\mu$m or more. D50 of the negative electrode active material may be, for example, 30 $\mu$m or less, 20 $\mu$m or less, 15 $\mu$m or less, or 10 $\mu$m or less.

The negative electrode active material may contain any component. The negative electrode active material may contain, for example, at least one selected from the group consisting of a carbon-based active material, an alloy-based active material, a Si-C composite material, a Li metal, a Li base alloy, and lithium titanate. In some present embodiments, the battery may be a Li metal negative electrode battery.

The carbon active material may contain, for example, at least one selected from the group consisting of graphite, soft carbon, and hard carbon. The term "graphite" is a generic term for natural graphite and artificial graphite. Graphite may be a mixture of natural graphite and artificial graphite. The mixing ratio (mass ratio) may be, for example, "natural graphite/artificial graphite = 1/9 to 9/1", "natural graphite/artificial graphite = 2/8 to 8/2" or "natural graphite/artificial graphite = 3/7 to 7/3".

The surface of graphite may be coated with, for example, amorphous carbon. The surface of graphite may be coated with, for example, a different material. The different material may contain, for example, at least one selected from the group consisting of P, W, Al, and O. The different material may contain, for example, at least one selected from the group consisting of $Al(OH)_3$, AlOOH, $Al_2O_3$, $WO_3$, $Li_2CO_3$, $LiHCO_3$, and $Li_3PO_4$.

The alloy-based active material may contain, for example, at least one selected from the group consisting of Si, Li silicate, SiO, a Si base alloy, tin (Sn), SnO, and a Sn base alloy.

For example, SiO may have a composition represented by the general formula "$SiO_x$". In the general formula, for example, the relationship of "$0 < x < 2$", "$0.5 \leq x \leq 1.5$" or "$0.8 \leq x \leq 1.2$" may be satisfied.

The term "Si-C composite material" refers to a composite material of a carbon-based active material (such as graphite) and an alloy-based active material (such as Si). For example, Si fine particles may be dispersed in carbon particles. For example, Si fine particles may be dispersed in graphite particles. For example, Li silicate particles may be coated with a carbon material (such as amorphous carbon).

Separator

The separator 20 may separate the positive electrode layer 11 from the negative electrode layer 12. The separator 20 has electrical insulating properties. The separator 20 may include, for example, at least one selected from the group consisting of a resin film (polymer film), an inorganic particle layer, and an organic particle layer. The separator 20 may include, for example, a resin film and an inorganic particle layer.

The resin film is porous. The resin film may include, for example, a microporous film and non-woven fabric. The resin film contains a resin backbone. The resin backbone may be, for example, continuously present in a mesh form. Pores are formed in the gaps of the resin backbone. The resin film allows the electrolyte to be transmitted. The resin film may have, for example, an average pore diameter of 1 $\mu$m or less. The average pore diameter of the resin film may be, for example, 0.01 to 1 $\mu$m or 0.1 to 0.5 $\mu$m. The "average pore diameter" may be measured by mercury porosimetry. The Gurley value of the resin film may be, for example, 50 to 250 s/100 cm$^3$. The "Gurley value" may be measured by the Gurley method.

The resin film may contain, for example, at least one selected from the group consisting of an olefin-based resin, a polyurethane-based resin, a polyamide-based resin, a cellulose-based resin, a polyether-based resin, an acrylic resin, and a polyester-based resin. The resin film may contain, for example, at least one selected from the group consisting of polyethylene (PE), polypropylene (PP), polyamide (PA), polyamideimide (PAI), polyimide (PI), aromatic polyamide (aramid), polyphenylene ether (PPE), and derivatives thereof. The resin film may be formed by, for example, a drawing method or a phase separation method. The thickness of the resin film may be, for example, 5 to 50 $\mu$m or 10 to 25 $\mu$m.

The resin film may have, for example, a single layer structure. The resin film may be formed of, for example, a PE layer. The backbone of the PE layer is formed of PE. The PE layer may have a shutdown function. The resin film may have, for example, a multilayer structure. The resin film may include, for example, a PP layer and a PE layer. The backbone of the PP layer is formed of PP. The resin film may have, for example, a three-layer structure. For example, the resin film may be formed by laminating the PP layer, the PE layer, and the PP layer in the order presented. The thickness of the PE layer may be, for example, 5 to 20 $\mu$m. The thickness of the PP layer may be, for example, 3 to 10 $\mu$m.

The inorganic particle layer may be formed on the surface of the resin film. The inorganic particle layer may be formed only on a surface or on both surfaces of the resin film. The inorganic particle layer may be formed on a surface facing the positive electrode layer 11 or a surface facing the negative electrode layer 12. Note that, the inorganic particle layer may be formed on the surface of the positive electrode layer 11 or the surface of the negative electrode layer 12.

The inorganic particle layer is porous. The inorganic particle layer contains inorganic particles. The inorganic particle may also be referred to as an "inorganic filler". Pores are formed in the gaps between inorganic particles. The thickness of the inorganic particle layer may be, for example, 0.5 to 10 $\mu$m or 1 to 5 $\mu$m. The inorganic particle may contain, for example, a heat-resistant material. The inorganic particle layer containing the heat-resistant material may also be referred to as a "heat resistance layer (HRL)". The inorganic particle may contain at least one selected from the group consisting of boehmite, alumina, zirconia, titania, magnesia, and silica. The inorganic particle may have any shape. The inorganic particle may be, for example, spherical, rodlike, platy, or fibrous. D50 of the inorganic particle may be, for example, 0.1 to 10 $\mu$m or 0.5 to 3 $\mu$m. The inorganic particle layer may further contain a binder. The binder may contain, for example, at least one selected from the group consisting of an acrylic resin, a polyamide-based resin, a fluorine-based resin, an aromatic polyether-based resin, and a liquid crystal polyester-based resin.

The separator 20 may include, for example, an organic particle layer. For example, the separator 20 may include the organic particle layer instead of the resin film. For example, the separator 20 may include the organic particle layer instead of the inorganic particle layer. The separator 20 may include both the resin film and the organic particle layer. The separator 20 may include both the inorganic particle layer and the organic particle layer. The separator 20 may include the resin film, the inorganic particle layer, and the organic particle layer.

The thickness of the organic particle layer may be, for example, 0.1 to 50 $\mu$m, 0.5 to 20 $\mu$m, 0.5 to 10 $\mu$m, or 1 to 5 $\mu$m. The organic particle layer contains organic particles. The organic particle may also be referred to as an "organic filler". The organic particle may contain a heat-resistant material. The organic particle may contain, for example, at least one selected from the group consisting of PE, PP, PTFE, PI, PAI, PA, and aramid. The organic particle may be, for example, spherical, rodlike, platy, or fibrous. D50 of the organic particle may be, for example, 0.1 to 10 $\mu$m or 0.5 to 3 $\mu$m.

The separator 20 may include, for example, a mix layer. The mix layer contains both the inorganic particle and the organic particle.

Electrolyte

The electrolyte is a liquid electrolyte. The electrolyte contains a solute and a solvent. The concentration of the solute may be, for example, 0.5 to 1 mol/L, 1 to 1.5 mol/L, 1.5 to 2 mol/L, 2 to 2.5 mol/L, or 2.5 to 3 mol/L. The term "mol/L" may sometimes be described as "M". The solute contains a supporting salt (Li salt). The solute may include, for example, an inorganic acid salt, an imide salt, an oxalate complex, and a halide. The solute may include, for example, at least one selected from the group consisting of $LiPF_6$, $LiBF_4$, $LiClO_4$, $LiAsF_6$, $LiSbF_6$, $LiN(SO_2F)_2$ "LiFSI", $LiN(SO_2CF_3)_2$ "LiTFSI", $LiB(C_2O_4)_2$ "LiBOB", $LiBF_2(C_2O_4)$ "LiDFOB", $LiPF_2(C_2O_4)_2$ "LiDFOP", $LiPO_2F_2$, $FSO_3Li$, LiI, LiBr and derivatives thereof.

The electrolyte may contain, for example, a carbonate-based solvent (carbonic ester-based solvent). The solvent may contain, for example, cyclic carbonate, chain carbonate, and fluorinated carbonate. The solvent may contain, for example, at least one selected from the group consisting of ethylene carbonate (EC), propylene carbonate (PC), butylene carbonate (BC), dimethyl carbonate (DMC), diethyl carbonate (DEC), ethyl methyl carbonate (EMC), monofluoroethylene carbonate (FEC), difluoroethylene carbonate, 4,4-difluoroethylene carbonate, trifluoroethylene carbonate, perfluoroethylene carbonate, fluoropropylene carbonate, difluoropropylene carbonate, and derivatives thereof.

The solvent may contain cyclic carbonate (such as EC, PC, or FEC) and chain carbonate (such as EMC, DMC, or DEC). The mixing ratio (volume ratio) of cyclic carbonate to chain carbonate may be, for example, "cyclic carbonate/chain carbonate = 1/9 to 4/6", "cyclic carbonate/chain carbonate = 2/8 to 3/7", or "cyclic carbonate/chain carbonate = 3/7 to 4/6".

The solvent may contain cyclic carbonate (such as EC or PC) and fluorinated cyclic carbonate (such as FEC). The mixing ratio (volume ratio) of cyclic carbonate to fluorinated cyclic carbonate may be, for example, "cyclic carbonate/-fluorinated cyclic carbonate = 99/1 to 90/10", "cyclic carbonate/fluorinated cyclic carbonate = 9/1 to 1/9", "cyclic carbonate/fluorinated cyclic carbonate = 9/1 to 7/3" or "cyclic carbonate/fluorinated cyclic carbonate = 3/7 to 1/9".

The solvent may contain, for example, EC, FEC, EMC, DMC, and DEC. The volume ratio of each component may satisfy, for example, the relationship represented by the relational equation "$V_{EC} + V_{FEC} + V_{EMC} + V_{DMC} + V_{DEC} = 10$". In the relational equation, "$V_{EC}$, $V_{FEC}$, $V_{EMC}$, $V_{DMC}$, and $V_{DEC}$" represent the volume ratio of EC, FEC, EMC, DMC, and DEC, respectively. The relationships of "$1 \leq V_{EC} \leq 4$", "$0 \leq V_{FEC} \leq 3$", "$V_{EC} + V_{FEC} \leq 4$", "$0 \leq V_{EMC} \leq 9$", "$0 \leq V_{DMC} \leq 9$", "$0 \leq V_{DEC} \leq 9$", and "$6 \leq V_{EMC} + V_{DMC} + V_{DEC} \leq 9$" are satisfied. For example, the relationship of "$1 \leq V_{EC} \leq 2$" or "$2 \leq V_{EC} \leq 3$" may be satisfied. For example, the relationship of "$1 \leq V_{FEC} \leq 2$" or "$2 \leq V_{FEC} \leq 4$" may be satisfied. For example, the relationship of "$3 \leq V_{EMC} \leq 4$" or "$6 \leq V_{EMC} \leq 8$" may be satisfied. For example, the relationship of "$3 \leq V_{DMC} \leq 4$" or "$6 \leq V_{DMC} \leq 8$" may be satisfied. For example, the relationship of "$3 \leq V_{DEC} \leq 4$" or "$6 \leq V_{DEC} \leq 8$" may be satisfied.

The solvent may have a composition of, for example, "EC/EMC = 3/7", "EC/DMC = 3/7", "EC/FEC/DEC = 1/2/7", "EC/DMC/EMC = 3/4/3", "EC/DMC/EMC = 3/3/4", "EC/FEC/DMC/EMC = 2/1/4/3", "EC/FEC/DMC/EMC = 1/2/4/3", "EC/FEC/DMC/EMC = 2/1/3/4", or "EC/FEC/DMC/EMC = 1/2/3/4", in the volume ratio.

The electrolyte may contain an ether-based solvent. The electrolyte may contain, for example, at least one selected from the group consisting of tetrahydrofuran (THF), 1,4-dioxane (DOX), 1,3-dioxolane (DOL), 1,2-dimethoxyethane (DME), 1,2-diethoxyethane (DEE), hydrofluoroether (HFE), ethylglyme, triglyme, tetraglyme, and derivatives thereof.

The electrolyte may contain any additive. The amount of addition (mass fraction with respect to the whole electrolyte) may be, for example, 0.01 to 5%, 0.05 to 3%, or 0.1 to 1%. The additive may include, for example, a solid electrolyte interphase (SEI) formation promoter, an SEI formation inhibitor, a gas generating agent, an overcharging inhibitor, a flame retardant, an antioxidant, an electrode protective agent, and a surfactant.

The additive may contain, for example, at least one selected from the group consisting of vinylene carbonate (VC), vinyl ethylene carbonate (VEC), 1,3-propanesultone (PS), tert-amylbenzene, 1,4-di-tert-butylbenzene, biphenyl (BP), cyclohexylbenzene (CHB), ethylene sulfite (ES), ethylene sulfate (DTD), γ-butyrolactone, a phosphazene compound, carboxylate ester [e.g., methyl formate (MF), methyl acetate (MA), methyl propionate (MP), or diethyl malonate (DEM)], fluorobenzene [e.g., monofluorobenzene (FB), 1,2-difluorobenzene, 1,3-difluorobenzene, 1,4-difluorobenzene, 1,2,3-trifluorobenzene, 1,2,4-trifluorobenzene, 1,3,5-trifluorobenzene, 1,2,3,4-tetrafluorobenzene, 1,2,3,5-tetrafluorobenzene, 1,2,4,5-tetrafluorobenzene, pentafluorobenzene, and hexafluorobenzene), fluorotoluene (e.g., 2-fluorotoluene, 3-fluorotoluene, 4-fluorotoluene, 2,3-difluorotoluene, 2,4-difluorotoluene, 2,5-difluorotoluene, 2,6-difluorotoluene, 3,4-difluorotoluene, and octafluorotoluene), benzotrifluoride (e.g., benzotrifluoride, 2-fluorobenzotrifluoride, 3-fluorobenzotrifluoride, 4-fluorobenzotrifluoride, 2-methylbenzotrifluoride, 3-methylbenzotrifluoride, and 4-methylbenzotrifluoride), fluoroxylene (e.g., 3-fluoro-o-xylene, 4-fluoro-o-xylene, 2-fluoro-m-xylene, and 5-fluoro-m-xylene), a sulfur-containing heterocyclic compound (e.g., benzothiazole, 2-methylbenzothiazole, and tetrathiafulvalene), a nitrile compound (e.g., adiponitrile and succinonitrile), phosphate ester (e.g., trimethyl phosphate and triethyl phosphate), carboxylic anhydride (e.g., acetic anhydride, propionic anhydride, oxalic anhydride, succinic anhydride, maleic anhydride, phthalic anhydride, and benzoic anhydride), alcohol (e.g., methanol, ethanol, n-propyl alcohol, ethylene glycol, and diethylene glycol monomethyl ether), and derivatives thereof.

The components described above as the solute and the solvent may be used as trace components (additives). The additive may contain, for example, at least one selected from the group consisting of $LiBF_4$, LiFSI, LiTFSI, LiBOB, LiDFOB, LiDFOP, $LiPO_2F_2$, $FSO_3Li$, LiI, LiBr, HFE, DOX, PC, FEC, and derivatives thereof.

The electrolyte may contain an ionic liquid. The ionic liquid may contain, for example, at least one selected from the group consisting of a sulfonium salt, an ammonium salt, a pyridinium salt, a piperidinium salt, a pyrrolidinium salt, a morpholinium salt, a phosphonium salt, an imidazolium salt, and derivatives thereof.

In some present embodiments, the battery may include a gel electrolyte. That is, the battery may be a polymer battery. The gel electrolyte may contain an electrolyte and a polymer material. The polymer material may form a polymer matrix. The polymer material may contain, for example, at least one selected from the group consisting of PVdF, PVdF-HFP, polyacrylonitrile (PAN), PVdF-PAN, polyethylene oxide (PEO), polyethylene glycol (PEG), and derivatives thereof.

Solid-state Battery

In some present embodiments, the battery may be a solid-state battery. The solid-state battery may have a bipolar structure. The solid-state battery includes a solid electrolyte instead of the electrolyte and the separator 20. The solid electrolyte may be included in the positive electrode layer 11 and the negative electrode layer 12. Instead of the separator 20, a solid electrolyte layer separates the negative electrode layer 12 from the positive electrode layer 11. For example, the solid electrolyte layer contains the solid electrolyte and the binder.

For example, the solid electrolyte may be powder. D50 of the solid electrolyte may be, for example, 0.1 $\mu$m or more, 0.2 $\mu$m or more, 0.3 $\mu$m or more, 0.4 $\mu$m or more, 0.5 $\mu$m or more, 0.6 $\mu$m or more, 0.7 $\mu$m or more, 0.8 $\mu$m or more, 0.9 $\mu$m or more, or 1 $\mu$m or more. D50 of the solid electrolyte may be, for example, 5 $\mu$m or less, 4 $\mu$m or less, 3 $\mu$m or less, 2 $\mu$m or less, or 1 $\mu$m or less.

The solid electrolyte may contain, for example, at least one selected from the group consisting of a sulfide solid electrolyte, a halide solid electrolyte, an oxide solid electrolyte, a hydride solid electrolyte, and a nitride solid electrolyte.

The sulfide solid electrolyte may contain at least one selected from the group consisting of an amorphous phase, a crystalline phase, and a glass-ceramic (crystallized glass) phase. The crystalline phase may be, for example, argyrodite or LGPS. The sulfide solid electrolyte contains Li and sulfur (S). The sulfide solid electrolyte may further contain any component in addition to Li and S.

The sulfide solid electrolyte may contain, for example, at least one selected from the group consisting of $LiI$-$LiBr$-$Li_3PS_4$, $Li_2S$-$SiS_2$, $LiI$-$Li_2S$-$SiS_2$, $LiI$-$Li_2S$-$P_2S_5$, $LiI$-$Li_2O$-$Li_2S$-$P_2S_5$, $LiI$-$Li_2S$-$P_2O_5$, $LiI$-$Li_3PO_4$-$P_2S_5$, $Li_2S$-$GeS_2$-$P_2S_5$, $Li_2S$-$P_2S_5$, $Li_{10}GeP_2S_{12}$, $Li_4P_2S_6$, $Li_7P_3S_{11}$, $Li_3PS_4$, and $Li_7PS_6$.

For example, "$LiI$-$LiBr$-$Li_3PS_4$" represents a sulfide solid electrolyte produced by mixing $LiI$, $LiBr$, and $Li_3PS_4$ at any amount-of-substance ratio. For example, the sulfide solid electrolyte may be produced by a mechanochemical method. The mixing ratio may be specified by adding a number in front of each raw material. For example, "$10LiI$-$15LiBr$-$75Li_3PS_4$" indicates that the mixing ratio is "$LiI/LiBr/Li_3PS_4$ = 10/15/75 (amount-of-substance ratio)".

For example, the sulfide solid electrolyte may have a composition represented by the general formula "$xLi_2S$-$(1-x)P_2S_5$". In the general formula, "x" may be, for example, more than 0, 0.1 or more, 0.2 or more, 0.25 or more, 0.3 or more, 0.4 or more, 0.5 or more, 0.6 or more, 0.7 or more, 0.75 or more, 0.8 or more, or 0.9 or more. "x" may be, for example, 1 or less, 0.9 or less, 0.8 or less, 0.7 or less, 0.75 or less, 0.6 or less, 0.5 or less, 0.4 or less, 0.3 or less, 0.2 or less, or 0.1 or less. For example, when "x = 0.75", "$xLi_2S$-$(1-x)P_2S_5$" may have a composition of $Li_3PS_4$.

For example, the sulfide solid electrolyte may have a composition represented by the general formula "$yLiI$-$zLiBr$-$(100-y-z)[xLi_2S$-$(1-x)P_2S_5]$". In the general formula, "x" may be, for example, 0.5 or more, 0.6 or more, 0.7 or more, 0.75 or more, 0.8 or more, or 0.9 or more. "x" may be, for example, 1 or less, 0.9 or less, 0.8 or less, 0.75 or less, 0.7 or less, or 0.6 or less. "y" may be, for example, 0 or more, 5 or more, 10 or more, 15 or more, 20 or more, or 25 or more. "y" may be, for example, 30 or less, 25 or less, 20 or less, 15 or less, 10 or less, or 5 or less. "z" may be, for example, 0 or more, 5 or more, 10 or more, 15 or more, 20 or more, or 25 or more. "z" may be, for example, 30 or less, 25 or less, 20 or less, 15 or less, 10 or less, or 5 or less.

For example, the sulfide solid electrolyte may have a composition represented by the general formula "$Li_{7-x-2y}PS_{6-x-y}X_y$". In the general formula, the relationships of "$0 < 7 - x - 2y$", "$0 < 6 - x - y$", "$0 \leq x$" and "$0 \leq y$" are satisfied. "X" may include, for example, at least one selected from the group consisting of fluorine (F), chlorine (Cl), bromine (Br), and iodine (I).

For example, the sulfide solid electrolyte may have a composition represented by the general formula "$Li_{4-x}M_{1-x}P_xS_4$". In the general formula, "x" may be, for example, more than 0, 0.1 or more, 0.2 or more, 0.3 or more, 0.4 or more, 0.5 or more, 0.6 or more, 0.7 or more, 0.8 or more, or 0.9 or more. "x" may be, for example, less than 1, 0.9 or less, 0.8 or less, 0.7 or less, 0.6 or less, 0.5 or less, 0.4 or less, 0.3 or less, 0.2 or less, or 0.1 or less. "M" may include, for example, at least one selected from the group consisting of Al, Zn, In, Ge, Si, Sn, Sb, Ga, and Bi.

For example, the sulfide solid electrolyte may have a composition represented by the general formula "$Li_{10+x}Ge_{1+x}P_{2-x}S_{12}$". In the general formula, "x" may be, for example, 0 or more, 0.1 or more, 0.2 or more, 0.3 or more, 0.4 or more, 0.5 or more, or 0.6 or more. "x" may be, for example, 0.7 or less, 0.6 or less, 0.5 or less, 0.4 or less, 0.3 or less, 0.2 or less, or 0.1 or less. The sulfide solid electrolyte represented by the above general formula may contain, for example, an LGPS crystal phase.

For example, the halide solid electrolyte may have a composition represented by the general formula "$Li_{6-na}M_aX_6$". In the general formula, "n" represents the oxidation number of "M". For example, "M" may include an atom having an oxidation number of +3. For example, "M" may include an atom having an oxidation number of +4. For example, "M" may include at least one selected from the group consisting of Y, Al, Ti, Zr, Ca, and Mg. For example, "$0 < a < 2$" may be satisfied. "X" may include, for example, at least one selected from the group consisting of F, Cl, Br, and I.

For example, the halide solid electrolyte may have a composition represented by the general formula "$Li_{3-a}Ti_aAl_{1-a}F_6$". In the general formula, "a" may be, for example, 0 or more, 0.1 or more, 0.2 or more, 0.3 or more, 0.4 or more, 0.5 or more, 0.6 or more, 0.7 or more, 0.8 or more, or 0.9 or more. "a" may be, for example, 1 or less, 0.9 or less, 0.8 or less, 0.7 or less, 0.6 or less, 0.5 or less, 0.4 or less, 0.3 or less, 0.2 or less, or 0.1 or less.

For example, the halide solid electrolyte may have a composition represented by the general formula "$Li_3Y\text{-}Cl_aBr_bI_{6\text{-}a\text{-}b}$". In the general formula, for example, the relationship of "$0 \leq a + b \leq 6$" may be satisfied. "a" may be, for example, 0 or more, 1 or more, 2 or more, 3 or more, 4 or more, or 5 or more. "a" may be, for example, 6 or less, 5 or less, 4 or less, 3 or less, 2 or less, or 1 or less. "b" may be, for example, 0 or more, 1 or more, 2 or more, 3 or more, 4 or more, or 5 or more. "b" may be, for example, 6 or less, 5 or less, 4 or less, 3 or less, 2 or less, or 1 or less.

For example, the oxide solid electrolyte may contain, for example, at least one selected from the group consisting of $LiNbO_3$, $Li_{1.5}Al_{0.5}Ge_{1.5}(PO_4)_3$, $La_{2/3\text{-}x}Li_{3x}TiO_3$, and $Li_7La_3Zr_2O_{12}$. For example, the hydride solid electrolyte may contain $LiBH_4$. For example, the nitride solid electrolyte may contain $Li_3N$ or $Li_3BN_2$.

Production of LMFP

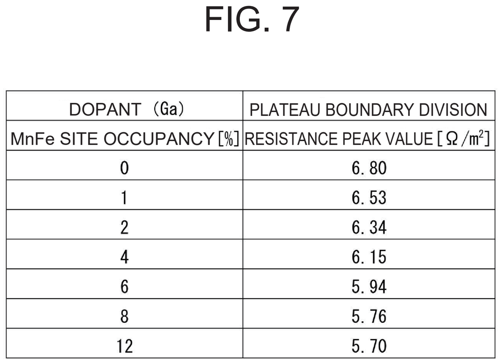

FIG. 7 is a table of the experimental results. Various LMFPs, each having a different site occupancy of the dopant (Ga), are produced by the following procedures.

Manganese carbonate, ferric phosphate, and lithium hydroxide are weighed such that Mn, Fe, and P achieve a desired composition ratio. Manganese carbonate, ferric phosphate, and lithium hydroxide are stirred and mixed in water to form a slurry. The slurry is spray dried to form a first precursor (powder). A mixture of the first precursor and a predetermined amount of a dopant sauce (gallium nitrate) is subjected to first firing in a nitrogen atmosphere. First firing corresponding to Ga that has a low melting point is conducted at a low temperature of 400°C for 24 hours to 48 hours. Gallium nitrate is considered that the reactivity thereof increases at a decomposition temperature near 400°C. After the first firing, second firing is conducted in a nitrogen atmosphere at 650°C, so that LMFP is produced. LMFP is pulverized by a planetary ball mill.

Evaluation

In various LMFPs, the discharge curve and the resistance change were measured.

Experimental Results

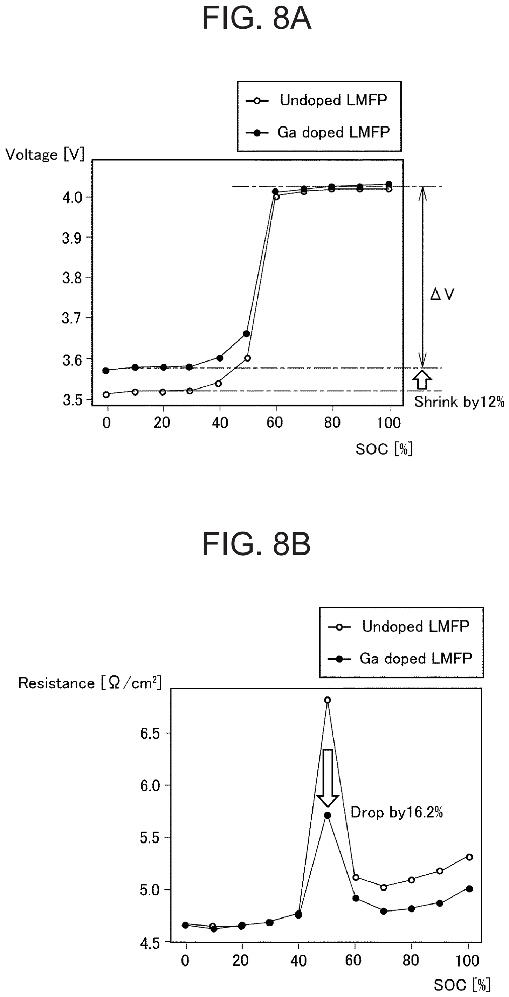

In FIG. 7, there is found a tendency that the more the site occupancy of Ga increases, the more the peak value of the resistance decreases. FIG. 8 is a graph illustrating the experimental results. FIG. 8A is a graph illustrating the discharge curves of Ga (0%) and Ga (12%). FIG. 8B is a graph illustrating the resistance changes of Ga (0%) and Ga (12%). The gap between plateaus was shrunk by 12% in Ga (12%) as compared with that in Ga (0%). Further, the peak value of the resistance in Ga (12%) was improved by 16.2% as compared with that in Ga (0%).

**Claims**

1.  A positive electrode active material, comprising olivine lithium manganese iron phosphate,

    wherein the olivine lithium manganese iron phosphate includes a dopant at a manganese-iron site, the dopant satisfying a relationship of

    $$d_{Fe\text{-}X} < d_{Mn\text{-}X}$$

    at the manganese-iron site,
    $d_{Fe\text{-}X}$ represents a nearest-neighbor atomic distance between the dopant and iron, and
    $d_{Mn\text{-}X}$ represents a nearest-neighbor atomic distance between the dopant and manganese.

2.  The positive electrode active material according to claim 1, wherein the dopant includes an element that causes valence fluctuation between 1+ and 3+.

3.  The positive electrode active material according to claim 2, wherein the dopant includes gallium.

4.  The positive electrode active material according to any one of claims 1 to 3, wherein a site occupancy of the dopant at the manganese-iron site is 1% or more.

5. The positive electrode active material according to claim 4, wherein the site occupancy is 4% or more.

6. The positive electrode active material according to claim 5, wherein the site occupancy is 8% or more.

7. The positive electrode active material according to any one of claims 1 to 3, wherein the olivine lithium manganese iron phosphate includes a composition represented by a general formula:

$$Li_{1+a}[(Mn_{1-b}Fe_b)_{1-c}X_c]PO_4$$

X represents the dopant, and
relationships of $-0.5 \leq a \leq 0.5$, $0.1 \leq b \leq 0.9$, and $0.01 \leq c \leq 0.12$ are satisfied.

8. The positive electrode active material according to any one of claims 1 to 3, wherein:

a discharge curve includes a Mn plateau derived from a redox reaction of manganese and a Fe plateau derived from a redox reaction of iron; and
a voltage difference between the Mn plateau and the Fe plateau is 0.5 V or less.

9. The positive electrode active material according to claim 6, wherein the site occupancy is 30% or less.

10. The positive electrode active material according to claim 8, wherein the voltage difference between the Mn plateau and the Fe plateau is 0.38 V or more.

11. An electrode comprising a positive electrode layer (11), wherein the positive electrode layer (11) includes the positive electrode active material according to any one of claims 1 to 3.

12. A battery (100) comprising the electrode according to claim 11.

13. The battery (100) according to claim 12, wherein the battery includes a bipolar structure.

# FIG. 1

# FIG. 2

# FIG. 3

MnFe site

# FIG. 4

# FIG. 5

# FIG. 6

# FIG. 7

| DOPANT （Ga） MnFe SITE OCCUPANCY [%] | PLATEAU BOUNDARY DIVISION RESISTANCE PEAK VALUE [ Ω/m$^2$] |
|---|---|
| 0 | 6.80 |
| 1 | 6.53 |
| 2 | 6.34 |
| 4 | 6.15 |
| 6 | 5.94 |
| 8 | 5.76 |
| 12 | 5.70 |

# FIG. 8A

# FIG. 8B

Europäisches
Patentamt

European
Patent Office

Office européen
des brevets

## EUROPEAN SEARCH REPORT

**Application Number**

EP 25 22 0084

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DONGHYUK JANG ET AL: "Structural and Electrochemical Properties of Doped LiFe 0.48 Mn 0.48 Mg 0.04 PO 4 as Cathode Material for Lithium ion Batteries", JOURNAL OF ELECTROCHEMICAL SCIENCE AND TECHNOLOGY (JECST), vol. 4, no. 3, 30 September 2013 (2013-09-30), pages 102-107, XP055315797, ISSN: 2093-8551, DOI: 10.5229/JECST.2013.4.3.102 | 1,4,5, 7-13 | INV. C01D15/00 H01M4/58 C01B25/26 C01B25/30 C01B25/32 C01B25/45 |
| Y | * abstract; table 2 * * Introduction * * figure 5 * * Title; paragraph [0001] * | 6 | |
| X | CN 118 723 963 A (HUBEI THREE GORGES LABORATORY) 1 October 2024 (2024-10-01) * paragraph [0010]; figure 1 * * claim 10 * * figure 2 * * paragraph [0001] * | 1-3,8, 10-12 | TECHNICAL FIELDS SEARCHED (IPC) C01D H01M C01B |
| Y | JP 2023 039365 A (FURUKAWA BATTERY CO LTD) 20 March 2023 (2023-03-20) * paragraph [0025] * | 6 | |

-/--

The present search report has been drawn up for all claims

| Place of search | Date of completion of the search | Examiner |
|---|---|---|
| The Hague | 16 February 2026 | Moussa, Chantal |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 2**

Europäisches
Patentamt

European
Patent Office

Office européen
des brevets

**EUROPEAN SEARCH REPORT**

Application Number

**EP 25 22 0084**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | NGUYEN VAN HIEP ET AL: "Improving Electrochemical Properties of LiFePO 4 by Doping with Gallium", TRANSACTIONS ON ELECTRICAL AND ELECTRONIC MATERIALS, vol. 15, no. 6, 25 December 2014 (2014-12-25), pages 320-323, XP093361077, ISSN: 1229-7607, DOI: 10.4313/TEEM.2014.15.6.320 * 3. Results and discussion; page 321 - page 323; figures 1,3 * ----- | 8,10 | |
| | | | TECHNICAL FIELDS SEARCHED (IPC) |

The present search report has been drawn up for all claims

| Place of search | Date of completion of the search | Examiner |
|---|---|---|
| The Hague | 16 February 2026 | Moussa, Chantal |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

........................................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 22 0084

This annex lists the patent family members relating to the patent documents cited in the above-mentioned European search report.
The members are as contained in the European Patent Office EDP file on
The European Patent Office is in no way liable for these particulars which are merely given for the purpose of information.

16-02-2026

| Patent document cited in search report | Publication date | Patent family member(s) | Publication date |
|---|---|---|---|
| CN 118723963 A | 01-10-2024 | NONE | |
| JP 2023039365 A | 20-03-2023 | JP 7765221 B2 | 06-11-2025 |
| | | JP 2023039365 A | 20-03-2023 |

EPO FORM P0459

For more details about this annex : see Official Journal of the European Patent Office, No. 12/82

**REFERENCES CITED IN THE DESCRIPTION**

**Patent documents cited in the description**

- WO 2016158566 A